# EUROPÄISCHE PATENTSCHRIFT

(11) **EP 0 975 182 B1**
(45) Veröffentlichungstag und Bekanntmachung des Hinweises auf die Patenterteilung: **17.12.2014**
(21) Anmeldenummer: 99106665.5
(22) Anmeldetag: 01.04.1999
(51) Int. Cl.: H04M 1/2745, H04M 1/57, H04M 1/725

(54) **Telekommunikationsgerät mit Schnittstelle zu einem Fernsehgerät als Monitor für Telekommunikations-Anwendungen**
Telecommunication device with an interface to a TV as a monitor for application in telecommunications
Appareil de télécommunication avec une interface pour un téléviseur comme un moniteur pour mise en application des télécommunications

(30) Priorität: 07.04.1998 DE 19815553
(43) Veröffentlichungstag der Anmeldung: 26.01.2000
(73) Patentinhaber: Grundig Multimedia AG, 6362 Stansstad (CH)
(72) Erfinder: Mager, Gerhard, 90762 Fürth (DE)
(74) Vertreter: Louis Pöhlau Lohrentz

(56) Entgegenhaltungen:
- EP-A- 0 698 985
- EP-A- 0 766 438
- JP-A- 07 064 535
- JP-A- 07 115 633
- US-A- 5 396 269

## Beschreibung

Die Erfindung betrifft ein Telekommunikationsgerät, insbesondere ein schnurloses ISDN-Telefon oder schnurlose ISDN-Telefonanlage mit einer Anzeigeeinrichtung zur Anzeige von Zusatzinformationen des Telekommunikationsgeräts nach dem Oberbegriff des Patentanspruchs 1, wie er aus der EP-A-0 766 438 bekannt ist.

Heutige bereits auf dem Markt erhältliche Komforttelefone, beispielsweise ISDN-Telefone, ermöglichen eine Vielzahl von Zusatz-Features, die häufig die Anzeige bestimmter Zusatzinformationen erforderlich machen. Hierzu sind drahtgebundene oder schnurlose Telefone in der Regel mit einer Anzeigeeinheit versehen. Bedingt durch die begrenzte Anzeigefläche, insbesondere bei schnurlosen Telekommunikationsgeräten, ist auch die Größe einer integrierten Anzeigeeinheit entsprechend minimal. Durch die geringe Anzeigefläche ist der Nutzen bestimmter Zusatzfeatures wie Telefonbuchfunktion etc. lediglich umständlich oder eingeschränkt möglich.

Der Erfindung liegt die Aufgabe zugrunde, ein Telekommunikationsgerät der eingangs genannten Art derart zu verbessern, daß eine erweiterte Nutzung von insbesondere in digitalen Telekommunikationsdiensten, wie ISDN möglichen Features auf einfache und benutzerfreundliche Weise ermöglicht wird.

Eine weitere Aufgabe der Erfindung ist es, ein Telekommunikationsgerät anzugeben, das die Darstellung und Handhabung auch umfangreicher Informationen auf einfache Weise ermöglicht und eine individuelle Konfiguration unterstützt.

Diese Aufgabe wird bei einem Telekommunikationsgerät durch die Maßnahmen des kennzeichnenden Teiles des Anspruchs 1 gelöst.

Damit wird es möglich, den in jedem Haushalt in der Regel ohnehin vorhandenen Bildschirm eines Fernsehgeräts als Monitor für die Anzeige von Zusatzinformationen des Telekommunikationsgeräts zu verwenden. Hierzu ist lediglich eine Schnittstelle zwischen dem Telekommunikationsgerät und dem Bildschirm bzw. dem Fernsehgerät sowie eine beispielsweise im Fernsehgerät angeordnete Logik erforderlich. Die im Telekommunikationsgerät integrierte Steuereinrichtung dient dabei zur Steuerung des Telekommunikationsgeräts im Ansprechen auf einen an das Telekommunikationsgerät übermittelten Steuerbefehl. Ein derartiger Steuerbefehl kann beispielsweise darin bestehen, daß bei aufgerufener Telefonbuchfunktion ein bestimmter Eintrag, d. h. eine bestimmte Telefonnummer selbsttätig durch das Telekommunikationsgerät angewählt wird. Durch die Großdarstellung beispielsweise von Telefonbuchdaten kann die Darstellung dieser Daten in nahezu beliebiger Größe auch mit Zusatzinformationen erfolgen, so daß auch beispielsweise sehbehinderte Personen eine derartige Anzeige entziffern können. Die Steuerung des Telekommunikationsgeräts, bzw. die Verwaltung und Benutzerführung kann dabei entweder mittels eines Mobilteils des Telekommunikationsgeräts und/oder mittels einer einem Fernsehgerät zugeordneten Fernbedienung erfolgen. Vorteilhaft ist es bei einem in dem Fernsehgerät integrierten Telekommunikationsgerät, wenn auch die Mobiltelefonfunktion und die Fernbedienungsfunktion in einem einheitlichen Gerät zusammengefaßt sind.

Zur Erhöhung des Benutzerkomforts ist erfindungsgemäß u. A. vorgesehen, daß das Mobilteil Mittel zur Fernbedienung eines mit dem Bildschirm gekoppelten Fernsehgerätes aufweist. Hierdurch wird es möglich, daß der Benutzer zum Telefonieren, zur Nutzung der Zusatzfeatures des Telekommunikationsgeräts und zur Fernbedienung des Fernsehgeräts lediglich eine einzige Einrichtung benötigt.

Eine besonders benutzerfreundliche Bedienung des Telekommunikationsgeräts wird dadurch ermöglicht, daß die Schnittstelle als drahtlose Schnittstelle ausgebildet ist, daß das Telekommunikationsgerät eine mit einer Telefonleitung koppelbare Basisstation und mindestens ein mit der Basisstation über eine Funkübertragungsstrecke verbindbares Mobilteil aufweist, wobei das Mobilteil Mittel zur Ansteuerung der in der Basisstation angeordneten Steuereinrichtung aufweist.

Die Realisierung gewünschter Zusatzfeatures wie Telefonbuchfunktion, Anruferliste, Gebührenmanagement mit Hilfe des Bildschirms insbesondere eines Fernsehgeräts kann auf einfache Weise dadurch erfolgen, daß das Telekommunikationsgerät auf einen Speicher zur Speicherung der Zusatzinformationen aufweist und daß das Telekommunikationsgerät und/oder das Fernsehgerät eine Text- und/oder Grafik-Erzeugungseinrichtung zur Erzeugung und/oder zur Darstellung der im Speicher gespeicherten Zusatzinformationen aufweist.

Eine mit Hilfe der Erfindung wesentliche Komfortfunktion besteht darin, daß der Speicher zur Speicherung von Telefonbuchdaten, insbesondere Name, Rufnummer und Bemerkungen und/oder zur Speicherung einer Anruferliste insbesondere Name, Rufnummer, Datum, Uhrzeit, Status, Bemerkungen und/oder zur Speicherung von Gebührenerfassungsdaten vorgesehen ist.

Ein weiterer Zusatznutzen ergibt sich dadurch, daß das Telekommunikationsgerät in einer Betriebsweise "Ruhe vor dem Telefon" betreibbar ist, in der die Steuereinrichtung Informationsdaten eines eingehenden Telefonanrufs, insbesondere die Rufnummer auf dem Bildschirm einblendet.

Dadurch, daß das Telekommunikationsgerät einen Speicher aufweist, der im Ansprechen auf einen Steuerbefehl zur Speicherung von auf dem Bildschirm dargestellten Ziffern und/oder Texteinblendungen, insbesondere auf dem Bildschirm eingeblendeten Telefonnummern vorgesehen ist, wird ermöglicht, daß eingeblendete Telefonnummern beispielsweise für Gewinnspiele, Bestellungen, Faxabrufe etc, nicht mehr umständlich und fehlerbehaftet manuell aufgeschrieben werden müssen, sondern entweder automatisch oder nach einem Bedienbefehl direkt im Telekommunikationsgerät gespeichert werden können. Die Telefonnummern und ggf. zugehörige Zusatzinformationen können dabei entweder aus einer direkten Bildschirmeinblendung oder beispielsweise auch aus Teletext-Daten detektiert werden.

Vorteilhafterweise weist das Telekommunikationsgerät hierfür einen Decodierer zur Decodierung von in einem Fernsehsignal übertragenen Telefonnummern kennzeichnenden Einblendungen auf.

Die Gerätevielfalt kann dadurch reduziert werden, dass das Telekommunikationsgerät in einem Fernsehempfänger integriert ist. Der Fernsehempfänger kann dabei sowohl ein konventionelles Fernsehgerät mit Empfangstechnik und konventioneller Bildröhre als auch eine separate vom Bildschirm angeordnete Empfangseinrichtung mit integriertem Telekommunikationsgerät und separatem Bildschirm, beispielsweise einem Flachbildschirm sein.

Eine weitere Komfortfunktion des Telekommunikationsgeräts in Verbindung mit dem Bildschirm besteht darin, dass das Telekommunikationsgerät als schnurlose ISDN-DECT-In-House Telefonanlage ausgebildet ist, die mehrere Mobilteile aufweist, und dass Statusinformationen der ISDN-DECT-In-House Telefonanlage auf dem Bildschirm darstellbar sind. Derartige Statusinformationen sind beispielsweise die aktuellen Belegungszustände der einzelnen Mobilteile etc.

Der Einsatzbereich des Telekommunikationsgeräts kann auf einfache Weise dadurch erweitert werden, dass das Telekommunikationsgerät Mittel zum Empfang von Telefax- und/oder E-mail-Nachrichten aufweist und der Bildschirm zur Darstellung der Telefax- und/oder E-mail-Nachrichten vorgesehen ist.

Eine weitere nützliche Anwendung des Telekommunikationsgeräts besteht darin, dass das Telekommunikationsgerät mit einer insbesondere eine Videokamera aufweisenden Türstation koppelbar ist. So ist es mithilfe der mit dem Telekommunikationsgerät gekoppelten Mobilteile möglich, "mit der Türstation" Gespräche zu führen und beim Vorhandensein einer Videokamera das Bild der Videokamera auf dem Bildschirm darzustellen. Darüberhinaus ist auch eine Betätigung des Türöffners der Türstation mittels der Mobilteile möglich.

Im folgenden wird die Erfindung anhand der in den Figuren dargestellten Ausführungsbeispiele näher beschrieben und erläutert.

Es zeigen:
- Fig. 1:: ein erstes Ausführungsbeispiel eines Telekommunikationsgeräts und eines separaten Fernsehgeräts als Bildschirm,
- Fig. 2:: ein zweites Ausführungsbeispiel eines in einem Fernsehgerät integrierten Telekommunikationsgeräts.
- Fig. 3: ein Beispiel für die Darstellung von Zusatzinformationen des Telekommunikationsgeräts in Form einer Telefonbuchfunktion sowie einer Rufnummern-Speicherung bei TV-Texteinblendungen,
- Fig. 4: ein Beispiel für die Darstellung von Zusatzinformationen des Telekommunikationsgeräts in Form einer Anruferliste, sowie einer Einblendung einer Kurzinformation.
- Fig. 5: ein Beispiel für die Darstellung von Gebührenlisten,
- Fig. 6:: ein Beispiel für ein Mobilteil des Telekommunikationsgeräts und
- Fig. 7:: ein Beispiel für eine Darstellung von Statusinformationen einer aus mehreren Mobilteilen bestehenden schnurlosen Telekommunikationsanlage.

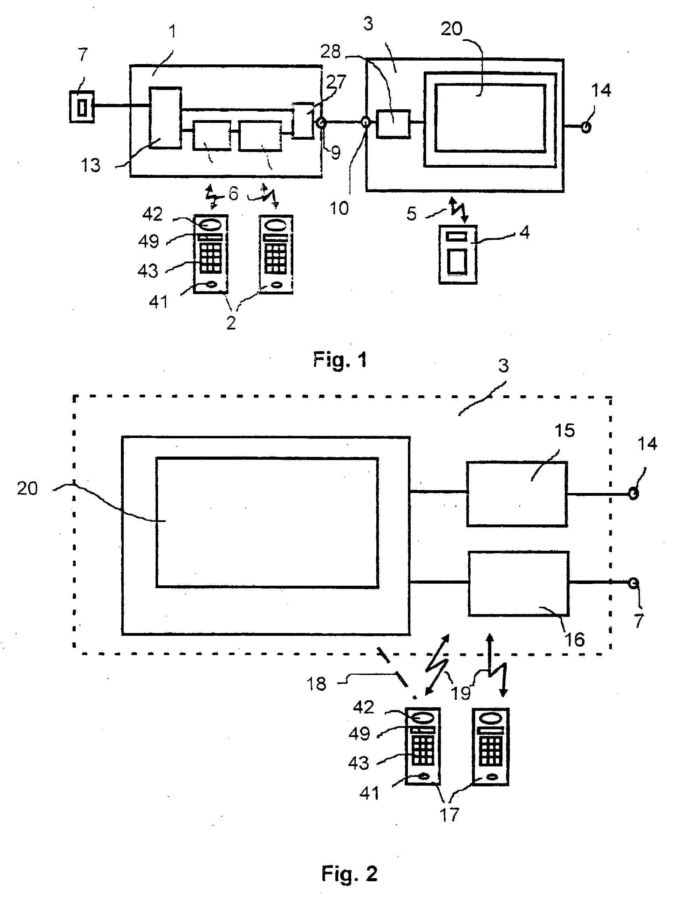

Fig. 1 zeigt ein erstes Ausführungsbeispiel eines Telekommunikationsgeräts 1, 2, welches über Schnittstellen 9, 10 mit einem Fernsehgerät 3 verbunden ist. Das Telekommunikationsgerät 1, 2 besteht aus einer Basisstation 1 und Mobilteilen 2. Die Basisstation 1 ist an eine Telefonanschlußdose 7 angeschlossen. In der Basisstation 1 sind alle zum Betrieb eines schnurlosen Telefons 1, 2 benötigten Vorrichtungen enthalten. Aus Gründen der Übersichtlichkeit sind diese in einer Verarbeitungseinrichtung 13 mit integriertem Funk-Sendeempfangsteil zusammengefaßt. Die Verarbeitungseinheit 13 der Basisstation 1 ist mit einer Antenne verbunden, die über eine Funkschnittstelle 6 mit den Mobilteilen 2 des Telekommunikationsgeräts 1, 2 kommunizieren kann. Die Basisstation weist darüberhinaus einen Speicher 12, eine Steuereinrichtung 11 sowie eine mit der Schnittstelle 9 verbundene Interface-Einheit 27 auf. Das Mobilteil 2 enthält die bekannten Komponenten zum Betrieb eines Mobilteils, von denen in Fig. 1 lediglich eine Tastatur 43, eine Anzeigevorrichtung 49, ein Mikrofon 41 sowie ein Lautsprecher 42 dargestellt sind. Die Schnittstelle 9 der Basisstation 1 ist über eine Verbindungsleitung 8 mit einer Schnittstelle 10 des Fernsehgeräts 3 verbunden. Das Fernsehgerät 3 weist einen Bildschirm 20, einen Antenneneingang 14 sowie eine mit der Schnittstelle 10 verbundene Interface-Einheit 28 auf. Die Interface-Einheit 28 enthält im wesentlichen die Logik zur Ansteuerung des Bildschirms 20 des Fernsehgeräts. Das Fernsehgerät 3 ist mittels einer Fernbedienung 4 über eine Infrarotverbindung 5 fernbedienbar.

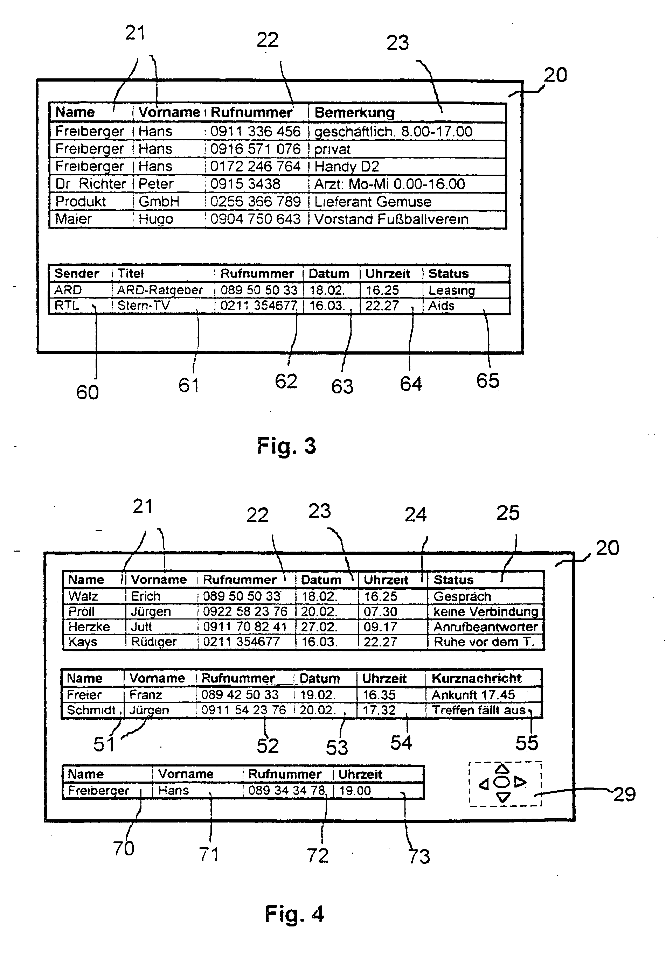

Mit Hilfe der Schnittstellen 9, 10, die beispielsweise als sogenannte Euro AV oder Scart-Verbindungen ausgebildet sind, wird bei dem in Fig. 1 dargestellten Ausführungsbeispiel ermöglicht, den Bildschirm 20 des Fernsehgeräts 3 als Monitor des Telekommunikationsgeräts 1 zu verwenden. Mit Hilfe dieser Schnittstelle wird einem Benutzer eine Benutzeroberfläche möglich, die wesentlich besser ais bisher möglich bereits vorhandene Feature beispielsweise des Euro-ISDN-Standards unterstützt oder auch für neue, zusätzliche Feature geeignet wird. Insgesamt ergeben sich eine erweiterte individuelle Konfigurierungsmöglichkeit. Nutzung und Kontrolle neuer Telekommunikationsfeatures. Die Bedienung des Telekommunikationsgeräts und dessen Steuerung kann dabei bequem mittels der Mobilteile 2 über die Funkschnittstelle 6 und/oder mittels der Fernbedienung 4 über die Infrarotschnittstelle 5 erfolgen. Mit Hilfe des mit dem Fernsehgerät 3 koppelbaren Telekommunikationsgeräts 1, 2 wird so die Möglichkeit geschaffen, auch Anwendungen die unter dem Schlagwort CTI (Computer-Telefon-Integration) bekannt sind, zu benutzen, ohne dass ein Anschluss an einen Computer erforderlich ist. Dabei sind die Telefonfunktionen auf eine graphische Oberfläche aufgesetzt und die Bedienung und Steuerung des Telefons erfolgt menügesteuert über den Bildschirm des Fernsehgeräts 3. Alle Funktionen des Telekommunikationsgeräts 1, 2 sind über die Mobilteile 2 und/oder die Fernbedienung 4 auf dem Bildschirm anwählbar. Derartige Funktionen sind insbesondere: Elektronisches Telefonbuch, Kurzwahlliste, TV-gestützte Anwahl, Gesprächsjournal, Anruferliste, Gebührenmanagement. Mögliche Anwendungsbeispiele werden im Zusammenhang mit den Fig. 3 - 5 und Fig 7 noch ausführlich erläutert.

Fig. 2 zeigt ein weiteres Ausführungsbeispiel für ein in einem Fernsehgerät 3 integriertes Telekommunikationsgerät. Das Fernsehgerät weist einen Bildschirm 20, eine Telekommunikationseinheit 16 sowie eine Fernseheinheit 15 auf Die Fernseheinheit 15 enthält einen Eingang 14 zum Empfang von Fernsehsignalen, während die Telekommunikationseinheit 16 über eine Schnittstelle 7 an ein Telefonsystem gekoppelt ist. Zur Fernbedienung sowie gleichzeitig als Mobilteil der Telekommunikationseinheit 16 sind kombinierte Mobilteil/Fernbedienungsgeräte 17 vorgesehen. Die Mobilteile 17 enthalten sowohl Mittel zur Fernbedienung des Fernsehgeräts über eine Schnittstelle 18 sowie Mittel zur Kommunikation mit der Telekommunikationseinheit 16 über eine Funkschnittstelle 19.

In der Telekommunikationseinheit 16 und/oder der Fernseheinheit 15 sind neben den zum Betrieb dieser Einrichtungen bekannten Vorrichtungen folgende Funktionsgruppen integriert: Text-, Grafik oder OSD-Baustein (On-Screen-Display) zur Darstellung von Zeichen in Spalten und Zeilen, ein Bildspeicher sowie eine Basisstation, insbesondere eine DECT-Basisstation zum Anschluß an ein analoges Telefonnetz oder ein digitales Telefonnetz, beispielsweise ISDN. Die Mobilteile 17 dienen als zentrales Bedienelement zur Fernsteuerung und zur Kommunikation mit der TV-Telekommunikationseinheit 3.

Fig. 3 zeigt einen Bildschirm 20, auf dem ein Beispiel für die Darstellung einer Telefonbuchfunktion gezeigt ist. Hierzu ist auf dem Bildschirm 20 eine Tabelle dargstellt, die aus Spalten und Zeilen besteht. In Spalte 21 ist dabei der Name der im Telefonbuch vorhandenen Einträge, in Spalte 22 die Rufnummer und in Spalte 23 Bemerkungen zu den jeweiligen Namenseinträgen vorgesehen. Insgesamt ergibt sich durch die Anwendung und Nutzung des TV-Geräts als zentraler Monitor somit eine übersichtliche Darstellung der vorhandenen Telefonbucheinträge. Dabei ist es möglich, personenenindividuelle Telefonbucheinträge anzulegen und darzustellen. So haben beispielsweise Vater, Mutter, Sohn und Tochter jeweils eigene Telefonbücher oder es ist eine Trennung von geschäftlichen und privaten Telefonbucheinträgen vorgesehen. Diese Telefonbucheinträge können mittels der Mobilteile und/oder mittels der Fernbedienung des Fernsehgeräts auf einfache Weise ergänzt, editiert oder umsortiert werden. Eine Nutzung der Telefonbuchfunktion besteht auch darin, dass ein Telefonbucheintrag mittels der Fernbedienung und/oder des Mobilteils ausgewählt wird und selbsttätig die Anwahl des gewünschten Teilnehmers durch das entweder im Fernsehgerät integrierte Telekommunikationsgerät oder mit dem Fernsehgerät gekoppelten Telekommunikationsgerät erfolgt. Im unteren Teil des Bildschirms 20 ist ein weiterer Anwendungsfall der TV-Telekommunikationseinheit dargestellt. Die in Fig. 3 im unteren Bereich des Bildschirms 20 dargestellte Einblendung besteht aus einer Spalte 60 zur Angabe des jeweiligen Fernsehprogramms, aus einer Spalte 61 zur Angabe eines Titels einer Sendung, aus einer Spalte 62 zur Angabe einer Telefonrufnummer, aus einer Spalte 63 zur Angabe eines Datums, aus einer Spalte 64 zur Angabe einer Uhrzeit und aus einer Spalte 65 zur Anzeige eines Status. Der Eintrag in den Spalten 60 ... 65 erfolgt beispielsweise in der Form, daß bei einer innerhalb eines Fernsehprogramms eingeblendeten Rufnummer mit Text der Benutzer eine Zusatzfunktion des Telekommunikationsgeräts aktivieren kann, die in der Lage ist, die dargestellte Rufnummer inclusive der Zusatzinformationen in einem Speicher des Telekommunikationsgeräts oder des Fernsehgeräts zu speichern. Hierdurch entfällt ein umständliches beispielsweise handschriftliches Notieren von Telefonnummern, welches zudem stark fehlerbehaftet ist. Der Benutzer eines derartigen Fernsehgeräts bzw. eines derartigen Telekommunikationsgeräts ist somit in der Lage, sich eine individuelle Datenbank aufzubauen, in der er Zusatzinformationen bestimmter Fernsehsendungen speichern kann. Eine alternative Möglichkeit zur Speicherung von Telefonnummern und Zusatzinformationen zu bestimmten Fernsehprogrammen ist beispielsweise dadurch möglich, dass derartige Zusatzinformationen aus dem Videotext übernommen werden.

Fig. 4 zeigt einen Bildschirm 20 mit dargestellten Zusatzinformationen 21 ... 26 als Zeilen-/Spaltentabeile. In den einzelnen Spalten 21 ... 26 der im oberen Bereich des Bildschirms 20 dargestellten Tabelle ist eine Anruferliste dargestellt. Hierbei sind in Spalten 21 Name und Vorname, in einer Spalte 22 die Rufnummer, in einer Spalte 24 das Datum, in einer Spalte 25 die Uhrzeit und in einer Spalte 26 der zugehörige Status registriert. Das mit dem Bildschirm 20 des Fernsehgeräts gekoppelte Telekommunikationsgerät kann in einen Betriebsmodus versetzt werden, der eine automatische Generierung einer derartigen Anruferliste erzeugt. Hierdurch wird es beispielsweise auch bei strittigen Auseinandersetzungen, wer welche Anrufe innerhalb eines bestimmten Zeitraumsgetätigt hat, möglich, den entsprechenden Status auch im nachhinein zu überprüfen. Eine derartige Anruferliste kann sowohl bezüglich ankommender wie auch abgehender Rufe erstellt werden.

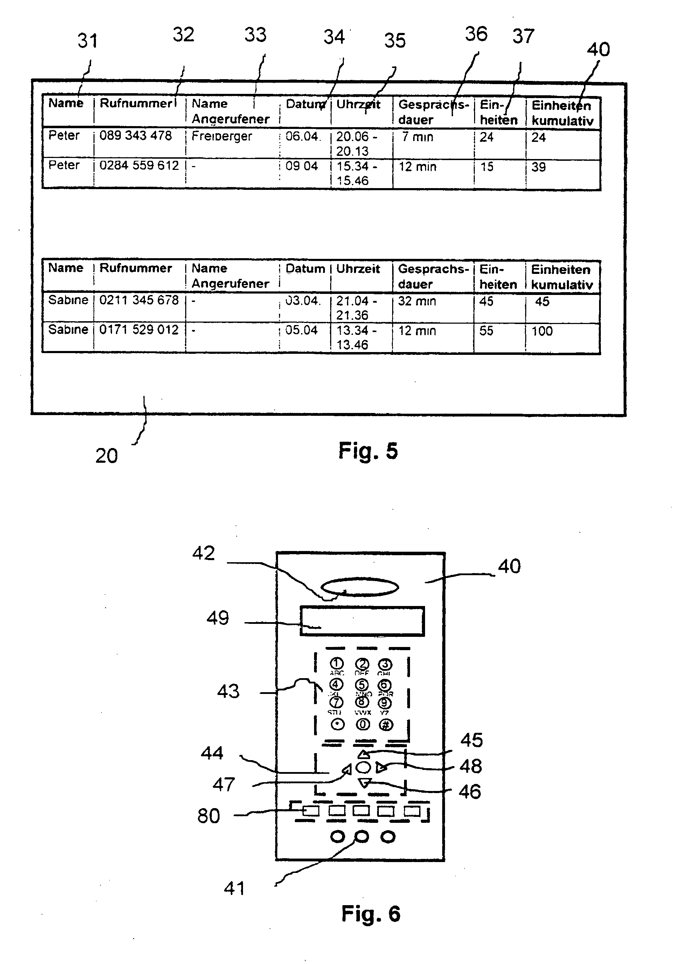

Im mittleren Bildbereich des Bildschirms 20 ist eine weitere Tabellenzusatzinformation dargestellt, die aus Spalten 51 ... 55 besteht. In Spalte 51 sind der Name bzw. Vorname eines Fernsprechteilnehmers, in Spalte 52 die Rufnummer und in Spalte 53, 54 Datum und Uhrzeit dargestellt. Darüberhinaus ist eine Spalte 55 enthalten, in der eine gespeicherte Kurznachricht dargestellt ist. Diese Kurznachricht wurde entweder vom anrufenden Teilnehmer beispielsweise mittels Mehrfrequenzwahlverfahren generiert oder die Kurznachricht ist akustisch in einem im Telekommunikationsgerät enthaltenen Speicher enthalten und kann über das Mobilteil und/oder die Fernbedienung abgerufen werden. Der in Fig. 4 im unteren Bildschirmbereich dargestellte Tabelleneintrag ist ein Beispiel einer optischen Meldung, in dem Fall, in dem das Telekommunikationsgerät in dem Betriebsmodus "Ruhe vor dem Telefon" arbeitet. Sofern der Benutzer dies wünscht, kann beispielsweise hierdurch während des Betrachtens eines Fernsehprogramms eine optische Meldung einer eingehenden Nachricht erfolgen. Der Benutzer kann in Kenntnis der übermittelten Informationen, wie Name und Rufnummer daraufhin selbst entscheiden, ob er den entsprechenden Anruf entgegennehmen will. In Fig. 4 ist im unteren rechten Bildschirmbereich eine mit dem Bezugszeichen 29 bezeichnete Tastatureinblendung vorgesehen. Die Tastatureinblendung dient der optischen Benutzerführung und soll dem Benutzer signalisieren, mit welchen Benutzertasten des Mobilteils bzw. der Fernbedienung er bestimmte Betriebsfunktionen etc. ausführen kann (vgl. auch Fig. 6).

Fig. 5 zeigt einen Bildschirm 20 mit zwei weiteren Möglichkeiten einer individuellen Darstellung von Zusatzinformationen. Bei dem in Fig. 5 dargestellten Beispiel ist im oberen Bildbereich eine nach Spalten 30 ... 37 aufgeteilte Gebührenliste dargestellt. In einer Spalte 30 sind der Name, in einer Spalte 31 die Rufnummer des angerufenen Teilnehmers, in einer Spalte 32 des angerufenen Teilnehmers, in Spalte 33, 34 das Datum sowie die Uhrzeit, in Spalte 35 die Gesprächsdauer und in Spalten 36, 37 die entsprechenden Gesprächseinheiten aufgelistet. Entsprechendes gilt für die im unteren Bildbereich des Bildschirms 20 dargestellte Gebührenliste einer Teilnehmerin namens Sabine.

Fig. 6 zeigt ein Ausführungsbeispiel eines Mobilteils des Kommunikationsgeräts, wie es beispielsweise im Zusammenhang mit dem in Fig. 2 dargestellten kombinierten TV-Telekommunikationsgerät verwendet werden kann. Das in Fig. 6 dargestellte Mobilteil 40 weist ein Tastaturfeld 43, ein Display 49, eine Benutzertastatur 44, ein Mikrofon 41, einen Lautsprecher 42 sowie weitere Funktionstasten 80 zur Bedienung und Steuerung des Telekommunikationsgeräts auf. Darüberhinaus sind im Mobilteil die zum Betrieb eines Mobilteils bzw. einer Fernbedienung erforderlichen Komponenten wie Funk-/Sendeempfangsteil etc. enthalten.

Das alphanumerische Tastaturfeld 43 besteht aus einem Zehnerziffernblock mit Zuordnung von alphabetischen Buchstaben. So sind beispielsweise der Ziffer 1 die alphabetischen Buchstaben ABC der Ziffer 2 die Buchstaben DEF etc. zugeordnet. Mittels des Benutzerführungstastaturfelds 44 ist eine einfache und übersichtliche Steuerung der auf dem Display 49 und/oder der auf einem Bildschirm eines Fernsehgeräts gezeigten Zusatzinformationen, Steuerungsinformationen etc. möglich, wie dies im Zusammenhang mit den Fig. 3 - 5 dargestellt und erläutert worden ist.

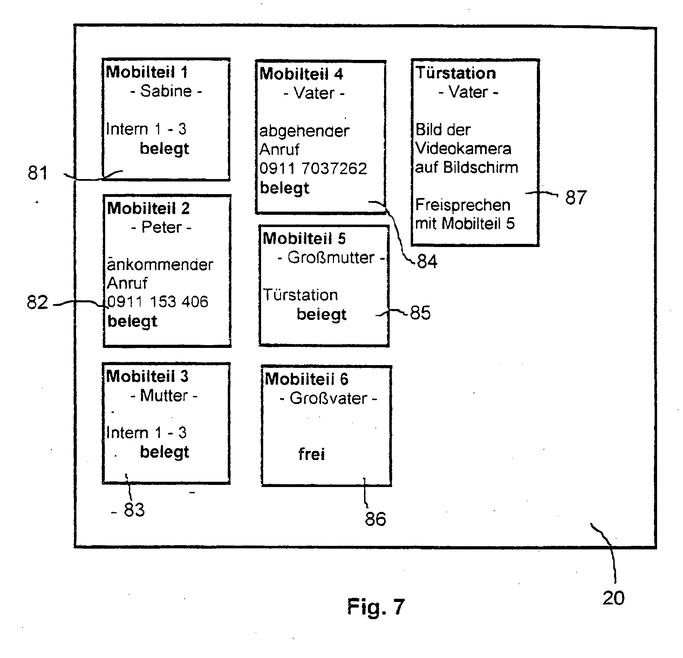

Fig. 7 zeigt ein Anwendungsbeispiel für eine Statusanzeige eines Telekommunikationsgeräts, welches als schnurlose In-House Telekommunikationsanlage mit einer Basisstation und sechs Mobilteilen ausgebildet ist. Die Mobilteile sind dabei jeweils verschiedenen Personen zugeordnet. So ist das Mobilteil 1 der Tochter Sabine, das Mobilteil 2 dem Sohn Peter, das Mobilteil 3 der Mutter, das Mobilteil 4 dem Vater, das Mobilteil 5 der Großmutter und das Mobilteil 6 der Großmutter zugeordnet. Darüberhinaus ist an die In-House Telekommunikationsanlage noch eine Türstation mit einer Videokamera gekoppelt. Die Zuordnung der einzelnen Mobilteile sowie der Türstation ist aus den Feldern 81, 82, 83, 84, 85, 86, 87 des in Fig. 7 dargestellten Bildschirms 20 ersichtlich.

Die Funktion "Statusanzeige" kann über die Mobilteile und/oder die Fernbedienung jederzeit aktiviert werden, um beispielsweise den Betriebszustand und den Status der Telefonanlage sichtbar zu machen. Darüberhinaus ist es mittels der an die Telefonanlage gekoppelten Türstation möglich, über ein Mobilteil mit einem an der Türstation anwesenden Besucher zu sprechen und auch eine Betätigung der Türöffnungsfunktion auszuführen. Darüberhinaus kann bei einer Türstation mit Videokamera auch eine Darstellung des Videobildes der Türstation als Großbild oder als eingeblendetes Bild ("Bild in Bild") auf dem Bildschirm 20 erfolgen. Bei einer Ausgestaltungsform des Telekommunikationsgeräts erfolgt nach einer Betätigung der Türklingel der Türstation automatisch eine Einblendung des Bildes der Videokamera der Türstation auf dem Bildschirm 20.

Zusammenfassend betrifft die Erfindung somit ein Telekommunikationsgerät 1 mit einer Interfaceeinheit 28 zu einem Bildschirm 20. Bei dem Telekommunikationsgerät handelt es sich beispielsweise um eine Telefonanlage, um einen schnurgebundenen oder schnurlosen Telefonapparat mit Basisstation und Mobilteil etc.. Bekannte Telefonapparate verfügen in der Regel über ein sogenanntes Display, auf dem Statusinformationen, Wahlinformationen etc. angezeigt werden können. Eine umfangreiche Übersicht und Darstellung ist auf einem derartigen Display aufgrund seiner beschränkten Größe nicht möglich. Der Erfindung liegt daher die Aufgabe zugrunde, ein Telekommunikationsgerät anzugeben, das die Darstellung auch umfangreicherer Informationen auf einfache Weise ermöglicht. Hierzu wird vorgeschlagen, daß die Schnittstelle 9 zwischen Telekommunikationsgerät 1 und Bildschirm 20 dazu benutzt wird, beispielsweise den Bildschirm 20 eines konventionellen Fernsehgeräts 3 als zentralen Monitor für die Verwaltung, Steuerung und Benutzerführung des Telekommunikationsendegeräts 1 vorzusehen. Mögliche Applikationen sind eine Telefonbuchfunktion, eine Anruferliste, eine optische Meldung eines Telefonanrufs, eine Speicherung von über ein Fernsehsignal eingeblendeten Rufnummern, eine Einblendung von über das Telefon empfangenen Kurznachrichten, ein Gebührenmanagement der Telefongebühren, ein Empfang sowie eine Anzeige von Telefaxnachrichten und/oder eine Statusanzeige einer Inhouse Telefonanlage mit einer Basisstation und mehreren Mobilteilen. Das Telekommunikationsgerät kann als separate Einheit mit einer zum Anschluß an ein Fernsehgerät geeigneten Schnittstelle oder als in dem Fernsehgerät integrierte Einheit ausgebildet sein.

## Patentansprüche

1. Telekommunikationsgerät (1, 2), insbesondere schnurloses ISDN-Telefon oder schnurlose ISDN-Telefonanlage, mit einer Anzeigeeinrichtung (49) zur Anzeige von Zusatzinformationen des Telekommunikationsendgeräts (1), wobei das Telekommunikationsgerät (1, 2) eine Schnittstelle (9) zu einem Bildschirm (20) eines Fernsehgerätes (3) aufweist, der Bildschirm (20) des Fernsehgerätes (3) als Anzeigeeinrichtung zur Anzeige der Zusatzinformationen des Telekommunikationsgeräts (1, 2) vorgesehen ist und das Telekommunikationsgerät (1, 2) eine Steuereinrichtung (11) zur Steuerung des Telekommunikationsgeräts (1, 2) im Ansprechen auf einen vom Fernsehgerät (3) an das Telekommunikationsgerät (1, 2) übermittelten Steuerbefehl aufweist, wobei
das Telekommunikationsgerät (1, 2) einen Speicher (12) zur Speicherung der Zusatzinformationen (21 ... 37) aufweist, das Telekommunikationsgerät (1, 2) und/oder das Fernsehgerät (3) eine Text- und/oder Grafik-Erzeugungseinrichtung zur Erzeugung und/oder zur Darstellung der im Speicher (12) gespeicherten Zusatzinformationen (12 ... 37) beinhaltet, der Speicher (12) zur Speicherung von Telefonbuchdaten (21 ... 23), insbesondere Name, Rufnummer und Bemerkungen, und/oder zur Speicherung einer Anruferliste (21, 22, 23, 24, 25, 26), insbesondere Name, Rufnummer, Datum, Uhrzeit, Status, Bemerkungen, und/oder Speicherung von Gebührenerfassungsdaten (30 ... 37) vorgesehen ist,
**dadurch gekennzeichnet, dass** der Speicher (12) im Ansprechen auf einen Steuerbefehl zur Speicherung von auf dem Bildschirm (20) des Fernsehgerätes (3) dargestellten Ziffern und/oder Texteinblendungen, insbesondere eingeblendeter Telefonnummern, speichert und dass das Mobilteil (2) Mittel (43) zur Fernbedienung des Fernsehgeräts (3) aufweist.

2. Telekommunikationsgerät nach Anspruch 1,
**dadurch gekennzeichnet, dass**
die Schnittstelle (9) als drahtlose Schnittstelle ausgebildet ist, das Telekommunikationsgerät (1, 2) eine mit einer Telefonleitung (7) koppelbare Basisstation (1) und mindestens ein mit der Basisstation (1) über eine Funkübertragungsstrecke (6) verbindbares Mobilteil (2) aufweist, wobei das Mobilteil (2) Mittel (43) zur Ansteuerung der in der Basisstation 81) angeordneten Steuereinrichtung (11) aufweist.

3. Telekommunikationsgerät nach einem der Ansprüche 1 oder 2,
**dadurch gekennzeichnet, dass**
das Telekommunikationsgerät (1, 2) in einer Betriebsweise "Ruhe vor dem Telefon" betreibbar ist, in der die Steuereinrichtung (11) Informationsdaten (51 ... 55) eines eingehenden Telefonanrufs, insbesondere die Telefonnummer (52) auf dem Bildschirm (20) des Fernsehgeräts (3) einsendet.

4. Telekommunikationsgerät nach einem der Ansprüche 1 bis 3,
**dadurch gekennzeichnet, dass**
das Telekommunikationsgerät (1, 2) einen Decodierer zur Decodierung von in einem Fernsehsignal übertragenen Telefonnummern kennzeichnende Einbtendungen aufweist.

5. Telekommunikationsgerät nach einem der Ansprüche 1 bis 4,
**dadurch gekennzeichnet, dass**
das Telekommunikationsgerät (1, 2) in dem Fernsehgerät (3) integriert ist.

6. Telekommunikationsgerät nach einem der Ansprüche 1 bis 5,
**dadurch gekennzeichnet, dass**
das Telekommunikationsgerät (1, 2) als schnurlose ISDN-DECT-In-House Telefonanlage ausgebildet ist, die mehrere Mobilteile aufweist, und Statusinformationen der ISDN-DECT-In-House Telefonanlage auf dem Bildschirm (20) des Fernsehgeräts (3) darstellbar sind.

7. Telekommunikationsgerät nach einem der Ansprüche 1 bis 6,
**dadurch gekennzeichnet, dass**
das Telekommunikationsgerät (1, 2) Mittel zum Empfang von Telefax- und/oder E-mail-Nachrichten aufweist und der Bildschirm (20) des Fernsehgeräts (3) zur Darstellung der Telefax- und/oder E-mail-Nachrichten vorgesehen ist.

8. Telekommunikationsgerät nach einem der Ansprüche 1 bis 7,
**dadurch gekennzeichnet, dass**
das Telekommunikationsgerät (1, 2) mit einer insbesondere eine Videokamera aufweisenden Türstation koppelbar ist.

## Claims

1. Telecommunications device (1, 2), in particular a wireless ISDN telephone or wireless ISDN telephone system, having a display device (49) to display additional information of the telecommunications device (1), wherein the telecommunications device (1, 2) has an interface (9) to a screen (20) of a television set (3), the screen (20) of the television set (3) is provided as a display device to display the additional information of the telecommunications device (1, 2) and the telecommunications device (1, 2) has a control device (11) to control the telecommunications device (1, 2) in response to a command delivered by the television set (3) to the telecommunications device (1, 2), wherein
the telecommunications device (1, 2) has a memory (12) to store the additional information (21 ... 37), the telecommunications device (1, 2) and/or the television set (3) comprise(s) a textual and/or graphical generation device for the generation and/or depiction of the additional information (12 ... 37) stored in the memory (12), the memory (12) is provided to store telephone book data (21 ... 23), in particular name, telephone number and remarks, and/or to store a list of callers (21, 22, 23, 24, 25, 26), in particular name, telephone number, date, time, status, remarks, and/or to store fee collection data (30 ... 37),
**characterised in that** the memory (12) stores in response to a command to store digits and/or text overlays, in particular inserted telephone numbers, depicted on the screen (20) of the television set (3), and **in that** the handset (2) has a means(43) of remotely controlling the television set (3).

2. Telecommunications device according to claim 1,
**characterised in that**
the interface (9) is formed as a wireless interface, the telecommunications device (1, 2) has a base station (1) capable of being linked with a telephone line (7) and at least one handset (2) which is capable of being connected to the base station (1) via a radio transmission line (6), wherein the handset (2) has a means(43) of activating the control device (11) which is arranged in the base station (1).

3. Telecommunications device according to one of claims 1 or 2,
**characterised in that**
the telecommunications device (1, 2) is operable in a "do not disturb" operating mode, in which the control device (11) displays information data (51 ... 55) of an incoming telephone call, in particular the telephone number (52), on the screen (20) of the television set (3).

4. Telecommunications device according to one of claims 1 to 3,
**characterised in that**
the telecommunications device (1, 2) has a decoder to decode inserts featuring telephone numbers which are transferred in a television signal.

5. Telecommunications device according to one of claims 1 to 4,
**characterised in that**
the telecommunications device (1, 2) is integrated into the television set (3).

6. Telecommunications device according to one of claims 1 to 5,
**characterised in that**
the telecommunications device (1, 2) is formed as a wireless ISDN-DECT-In-House telephone system, which has several handsets, and status information of the ISDN-DECT-In-House telephone system can be displayed on the screen (20) of the television set (3).

7. Telecommunications device according to one of claims 1 to 6,
**characterised in that**
the telecommunications device (1, 2) has means of receiving telefax and/or email messages and the screen (20) of the television set (3) is provided to display the telefax and/or email messages.

8. Telecommunications device according to one of claims 1 to 7,
**characterised in that**
the telecommunications device (1, 2) is capable of being linked with a door station, in particular having a video camera.

## Revendications

1. Appareil de télécommunication (1, 2), en particulier téléphone ISDN sans fil ou installation téléphonique ISDN sans fil, comprenant un dispositif d'affichage (49) destiné à l'affichage d'informations complémentaires du terminal de télécommunication (1), étant entendu que l'appareil de télécommunication (1, 2) présente une interface (9) vers un écran (20) d'un appareil de télévision (3), que l'écran (20) de l'appareil de télévision (3) est prévu comme dispositif d'affichage pour l'affichage des informations complémentaires de l'appareil de télécommunication (1, 2) et que l'appareil de télécommunication (1, 2) présente un dispositif de commande (11) destiné à la commande de l'appareil de télécommunication (1, 2) en réponse à une instruction de commande transmise à l'appareil de télécommunication (1, 2) depuis l'appareil de télévision (3),
étant entendu que l'appareil de télécommunication (1, 2) présente une mémoire (12) destinée à l'enregistrement des informations complémentaires (21 ... 37), que l'appareil de télécommunication (1, 2) et/ou l'appareil de télévision (3) comprennent un dispositif de production de textes et/ou de graphiques destiné à la production et/ou à la représentation des informations complémentaires (21 ... 37) enregistrées dans la mémoire (12) et que la mémoire (12) est prévue pour l'enregistrement de données de répertoire téléphonique (21 ... 23), en particulier le nom, le numéro d'appel et des remarques, et/ou pour l'enregistrement d'une liste d'appelants (21, 22, 23, 24, 25, 26), en particulier le nom, le numéro d'appel, la date, l'heure, le statut et des remarques, et/ou pour l'enregistrement de données de calcul des redevances (30 ... 37),
**caractérisé en ce que** la mémoire (12) effectue l'enregistrement en réponse à une instruction de commande sur l'enregistrement de chiffres et/ou d'incrustations de textes représentés sur l'écran (20) de l'appareil de télévision (3), en particulier de numéros de téléphone incrustés, et **en ce que** la partie mobile (2) présente des moyens (43) destinés à la commande à distance de l'appareil de télévision (3).

2. Appareil de télécommunication selon la revendication 1,
**caractérisé**
**en ce que** l'interface (9) est réalisée comme interface sans fil et l'appareil de télécommunication (1, 2) présente une station de base (1) pouvant être couplée à une ligne téléphonique (7) et au moins une partie mobile (2) pouvant être reliée à la station de base (1) par le biais d'une liaison radio (6), étant entendu que la partie mobile (2) présente des moyens (43) destinés à la commande du dispositif de commande (11) agencé dans la station de base (1).

3. Appareil de télécommunication selon l'une des revendications 1 ou 2,
**caractérisé**
**en ce que** l'appareil de télécommunication (1, 2) peut être utilisé dans un mode de fonctionnement « Silence du téléphone » dans lequel le dispositif de commande (11) incruste des données d'information (51 ... 55) d'un appel téléphonique entrant, en particulier le numéro de téléphone (52), sur l'écran (20) de l'appareil de télévision (3).

4. Appareil de télécommunication selon l'une des revendications 1 à 3,
**caractérisé**
**en ce que** l'appareil de télécommunication (1, 2) présente un décodeur destiné au décodage d'incrustations caractéristiques de numéros de téléphone transmises dans un signal télévisé.

5. Appareil de télécommunication selon l'une des revendications 1 à 4,
**caractérisé**
**en ce que** l'appareil de télécommunication (1, 2) est intégré dans l'appareil de télévision (3).

6. Appareil de télécommunication selon l'une des revendications 1 à 5,
**caractérisé**
**en ce que** l'appareil de télécommunication (1, 2) est réalisé comme installation téléphonique ISDN-DECT à domicile, qui présente plusieurs parties mobiles, et des informations sur le statut de l'installation téléphonique ISDN-DECT à domicile peuvent être représentées sur l'écran (20) de l'appareil de télévision (3).

7. Appareil de télécommunication selon l'une des revendications 1 à 6,
**caractérisé**
**en ce que** l'appareil de télécommunication (1, 2) présente des moyens destinés à la réception de messages de télécopie et/ou de courrier électronique et l'écran (20) de l'appareil de télévision (3) est prévu pour la représentation des messages de télécopie et/ou de courrier électronique.

8. Appareil de télécommunication selon l'une des revendications 1 à 7,
**caractérisé**
**en ce que** l'appareil de télécommunication (1, 2) peut être couplé à une station de porte présentant en particulier une caméra vidéo.
